# EUROPÄISCHE PATENTANMELDUNG

(11) **EP 0 564 933 A1**
(43) Veröffentlichungstag der Anmeldung: **13.10.1993**
(21) Anmeldenummer: 93105086.8
(22) Anmeldetag: 27.03.1993
(51) Int. Cl.: B29C 59/16

(54) **Flächige Polyethylenterephthalat-Materialien mit geringer Oberflächenrauhigkeit sowie ein Verfahren zu ihrer Herstellung und ihre Verwendung**

(30) Priorität: 08.04.1992 DE 4211712
(71) Anmelder: BASF Magnetics GmbH, D-68165 Mannheim (DE)
(72) Erfinder: Hagemeyer, Alfred, Dr., W-4440 Rheine (DE); Schildberg, Hans-Peter, Dr., W-6800 Mannheim 1 (DE); Hibst, Hartmut, Dr., W-6905 Schriesheim (DE); Baeuerle, Dieter, Prof. Dr., A-4203 Altenberg (AT); Heitz, Johannes, W-7800 Freiburg (DE)
(74) Vertreter: Karau, Wolfgang, Dr.

(57) **Zusammenfassung**

Die Erfindung betrifft flächige Polyethylenterephthalat-Materialien mit einer geringen Oberflächenrauhigkeit aus dendritischen, plateauartigen Strukturen mit zerklüftetem, fraktalem Rand, ein Verfahren zu ihrer Herstellung durch Bestrahlen der Oberflächen mit einer durch den Zerfall von Excimeren erzeugten UV-Strahlung sowie die Verwendung derart behandelter Polyethylenterephthalat-Filme als Substratmaterial für ferromagnetische Metalldünnschichten.

## Beschreibung

Die Erfindung betrifft flächige Polyethylenterephthalat-Materialien mit einer geringen Oberflächenrauhigkeit, ein Verfahren zu ihrer Herstellung durch Bestrahlen der Oberflächen mit einer durch den Zerfall von Excimeren erzeugten UV-Strahlung sowie die Verwendung derart behandelter Polyethylenterephthalat-Filme als Substratmaterial für ferromagnetische Metalldünnschichten.

Die Ausgestaltung von flächigen Polyethylenterephthalat-Material mit einer definierten Oberflächenrauhigkeit ist bei vielen Verwendungen dieses Materials notwendig. Die Rauhigkeiten bewirken generell eine Verbesserung der Haftung, beispielsweise bei Verklebungen, bei der Bedruckbarkeit oder der Benetzbarkeit. Eine aufgerauhte Oberfläche wirkt sich auch günstig beim Stapeln dieses Materials oder beim Wickeln von entsprechenden Folienbahnen aus. Polyethylenterephthalat (PET)-Folien mit einer definierten Rauhigkeit sind insbesondere für die Herstellung von magnetischen Aufzeichnungsmedien, die aus einem polymeren Substrat, einer auf der Oberfläche des Sübstrats durch ein PVD-Verfahren (physical vapour deposition) aufgebrachten kohärenten, ferromagnetischen Metalldühnschicht und gegebenenfalls auf der Metallschicht ausgebildeten Schutzschicht bestehen, von großer Wichtigkeit. Durch die Oberflächenrauhigkeit der Folien wird ein geringer Verschleiß der Magnetschicht bei einer tribologischen Beanspruchung durch den Magnetkopf gewährleistet. Dabei kommt es durch die Aufrauhung der Polymeroberfläche auch zu einer Verbesserung der Haftung zwischen Polymer und Magnetschicht. Daneben stellen die mechanische und chemische Stabilität der Metallschicht besondere Anforderungen an die Verfahrensweise. Diese Problemfelder können jedoch nicht isoliert betrachtet werden, da eine wie auch immer geartete Optimierung der mechanischen Eigenschaften der zur Diskussion stehenden magnetischen Aufzeichnungsmedien niemals zu Einbußen auf der Seite der magnetischen, d.h. der die Informationsspeicherung betreffenden Eigenschaften, führen darf.

Die Verringerung des Verschleißes der Magnetschicht durch die tribologische Beanspruchung des Magnetkopfes wird u.a. dadurch erreicht, daß durch die Oberflächenrauhigkeit ein direkter Kontakt des Magnetkopfes mit der Metallschicht auf seiner gesamten, makroskopischen Auflagefläche vermieden wird. Damit dieser Effekt erreicht wird, ist es wichtig, daß der mittlere Abstand der Erhebungen auf der Oberfläche klein ist gegen die Dimensionen der makroskopischen Auflagefläche des Magnetkopfes. Die Höhe der Oberflächenrauhigkeit wird dadurch begrenzt, daß bei zu großer Höhe der Oberflächenrauhigkeit die magnetischen Aufzeichnungs- und Wiedergabe-Eigenschaften der aufgebrachten Schichten durch die Abstandsdämpfung schlecht werden.

Um die gewünschten Eigenschaften der Polymerfolien zur Verwendung als Trägermaterial magnetischer Dünnschichtmedien zu erreichen, werden bisher Folien verwendet, bei denen eine definierte Oberflächenrauhigkeit durch Einbau oder Auftragen von kleinsten Teilchen aus einem inerten Material erzeugt wird (z.B. EP 0 153 853). Diese Folien sind zwar gut geeignet, jedoch erfordert die Herstellung solcher Folien besondere und aufwendige Herstellungstechniken.

Die anderen an sich bekannten Verfahren der Oberflächenbehandlung von Polymeroberflächen im Plasma, durch Glimmentladung, Coronaentladung, Flämmen, chemisches Ätzen oder Ionenbestrahlung vor dem Metallisieren können nie voll befriedigen. Wesentlich hierfür war vor allem die nur ungenügende Kontrollierbarkeit der Energieeinwirkung und/oder Restgassteuerung sowie die auftretende Kontamination durch Zersetzungsprodukte.

Auch die bisher beschriebenen Verfahren der UV-Bestrahlung von Polymeroberflächen mit kontinuierlichen UV-Strahlern wie z.B. Quecksilberdampflampen zur Verbesserung der Lackierbarkeit, zur Verbesserung der Bedruckbarkeit von Polyolefinen (US-A 4 933 123), zur Erhöhung der Haftfestigkeit von Klebstoffen auf Polyethylenterephthalatfolien (JP-A 313 850/1989) ergeben dagegen im Fall von magnetischen Aufzeichnungsmedien mit kohärenten Metallschichten nur eine unzureichende Steigerung der Haftung. Aufgrund der langen Bestrahlungszeiten mit kontinuierlichen UV-Lampen in der Größenordnung einiger Minuten ist der Prozeß sehr zeitintensiv und erlaubt keine großen Verarbeitungsgeschwindigkeiten.

Desweiteren ist bekannt, daß auf der Oberfläche von verstreckten PET-Folien durch die Bestrahlung mit einem UV-Excimerlaser eine periodische noppenförmige bzw. walzenförmige Struktur erzeugt werden kann (E. Ahrenholz et. al., Appl. Phys. A 53,330 (1991)). Diese Strukturen treten in einem Energiebereich auf, in dem die Laserbestrahlung zu einem Materialabtrag (Laserablation) führt. Die Strukturen haben einen typischen Abstand von einigen µm und bilden sich erst nach der Bestrahlung der Folien mit mehreren Pulsen (mindestens 3 bis 4) vollständig aus. Der Strukturabstand nimmt mit wachsender Energie und Pulszahl ebenso wie die Höhe der Strukturen zu. Die Höhe dieser Strukturen kann mehrere µm betragen. Sowohl die Höhe dieser Strukturen als auch der Strukturabstand sind im allgemeinen für eine Anwendung der so behandelten Folien als Träger für magnetische Dünnschichtmedien zu groß.

Aufgabe der vorliegenden Erfindung war es daher, flächige Polyethylenterephthalat-Materialien mit einer definierten jedoch sehr geringen Oberflächenrauhigkeit bereitzustellen und ein Verfahren anzugeben, das die angegebenen Nachteile nicht aufweist und mit dem solche Oberflächenrauhigkeiten in einfacher Weise und ohne Materialabtrag hergestellt werden können sowie eine Gleichmäßigkeit der Eigenschaften auch auf großen Flächen bei hoher Verfahrensgeschwindigkeit gewährleistet.

Es wurde nun gefunden, daß flächige Polyethylenterephthalat-Materialien der gestellten Aufgabe genügen, wenn die Oberflächenrauhigkeit aus dendritischen, plateauartigen Strukturen mit zerklüftetem, fraktalem Rand bestehen.

Gegenstand der Erfindung ist außerdem ein Verfahren zur Herstellung dieser flächigen Polyethylenterephthalat-Materialien mit den wie angegeben definierten Oberflächenrauhigkeiten durch Bestrahlen des Polyethylenterephthalat-Materials mit durch den Zerfall von Excimeren erzeugtem UV-Licht in einem Wellenlängenbereich von 150 bis 400 nm. Bei dieser Vorgehensweise hat es sich als vorteilhaft herausgestellt, die Bestrahlung des Polyethylenterephthalat-Materials im Vakuum bei einer Temperatur von weniger als 100°C, vorzugsweise weniger als 60°C durchzuführen. In gleicher Weise läßt sich das Verfahren auch in einer Sauerstoff, Stickstoff oder Argon aufweisenden Atmosphäre durchführen, sofern im Falle von Sauerstoff und Stickstoff der Partialdruck kleiner 200 mbar, bzw. im Falle von Argon kleiner 1 bar ist. Bis zu diesen Partialdrücken und unter Berücksichtigung der genannten Temperaturen läßt sich somit auch in Gegenwart von Sauerstoff, Stickstoff oder Argon die dendritische, plateauartige Struktur erhalten. Ein nach dem Erzeugen der Dendrit-Struktur vorgenommenes Tempern des Materials bleibt, solange das Polyethylenterephthalat-Material selbst stabil bleibt, ohne Einfluß auf die gebildete Struktur, eine Rückbildung der Dendritstruktur findet nicht statt.

Die erfindungsgemäß durch die feinrauhe Oberfläche gekennzeichneten PET-Materialien zeichnen sich durch eine homogene Flächendichte isolierter und diskreter Vorsprünge mit den charakteristisch dendritischen Strukturen aus. Diese Strukturen mit fraktalem Rand bilden eine Höhe von 2 bis 50, vorzugsweise 2 bis 30 nm und das Verhältnis von Umfang zu Höhe ist größer als 500. Der mittlere Abstand der verästelten Strukturen beträgt in Abhängigkeit von der zu ihrer Erzeugung eingebrachten Energie und der Einwirkungsdauer weniger als 10, gegebenenfalls unter 1 µm. Damit unterscheiden sich diese die erfindungsgemäßen Materialien kennzeichnenden Strukturen sowohl in ihrem Aussehen als auch in ihrer Größe deutlich von den bisher bekannten noppen- bzw. walzenförmigen Strukturen, die entweder durch eine Oberflächenausrüstung der Materialien oder durch eine nach dem Stand der Technik vorgenommene UV-Bestrahlung der Oberfläche erhalten wurden.

Durch die Erfindung ist es möglich geworden, daß PET-Materialien die Vorteile einer aufgerauhten Oberfläche aufweisen, nicht jedoch die nach dem Stand der Technik durch eine globale und drastische Aufrauhung der Oberfläche bedingten Nachteile. Weitere Vorteile, Einzelheiten und Merkmale des erfindungsgemäßen Materials und des erfindungsgemäßen Verfahrens ergeben sich anhand der nachfolgenden Beschreibung, einiger Ausführungsbeispiele und anhand der Figuren.

Dabei zeigen
- Figur 1: eine erfindungsgemäße PET-Oberfläche mit den dendritischen, plateauartigen, einen zerklüfteten Rand zeigenden Strukturen,
- Figur 2: die unbehandelte PET-Oberfläche und
- Figur 3: eine nach dem Stand der Technik durch Bestrahlung mit UV-Licht veränderten PET-Oberfläche.

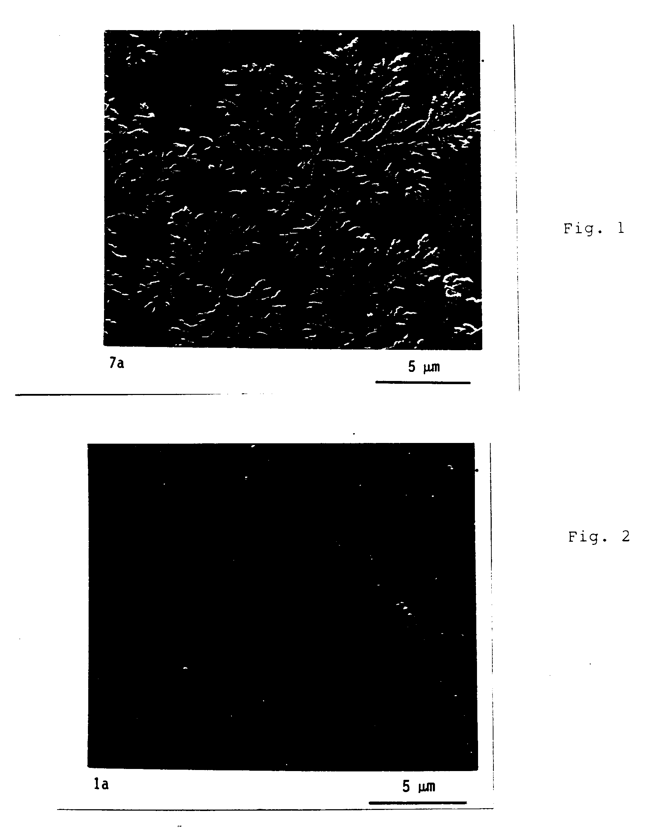

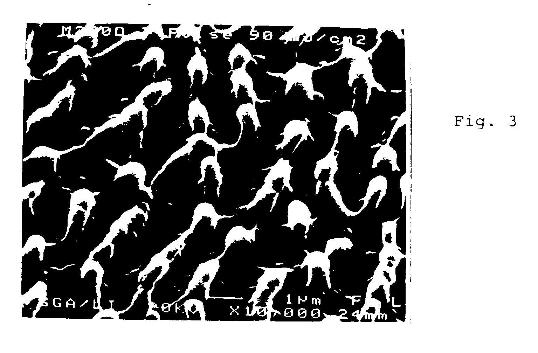

Die in Figur 1 gezeigte Oberfläche wurde durch Bestrahlen einer PET-Folie mit einem Excimerlaser der Wellenlänge 248 nm mit einem Puls bei einer Energiedichte von 39 mJ/cm² im Hochvakuum erzeugt, während eine gleiche PET-Folie in derselben Apparatur, wie im Stand der Technik üblich, vielen Pulsen bei einer Energiedichte von 90 mJ/cm² zu einer Noppen aufweisenden Oberfläche, wie aus Figur 3 ersichtlich, führt
Die für das erfindungsgemäße Verfahren eingesetzte auf dem Zerfall von Excimeren beruhende Strahlung, z.B. des Excimer-Lasers oder der inkohärenten Excimerlampe, ist bekannt. Die geeigneten Wellenlängen sind im Bereich von 150 bis 400 nm, wobei insbesondere der (KrF)-Laser mit einer Wellenlänge von 248 nm und der (XeCl)-Laser mit einer Wellenlänge von 308 nm bevorzugt ist. Dabei wird die Oberfläche des PET-Materials je nach chemischem Aufbau und in Abhängigkeit von der eingestrahlten Wellenlänge mit einer Energiedichte zwischen 1 und 1000, vorzugsweise zwischen 20 und 90 und insbesondere beispielsweise im Falle des (KrF)-Lasers zwischen 30 und 70 mJ/cm² mit 1 bis 25, vorzugsweise 1 bis 3 Pulsen/Flache bestrahlt. Bei ihrem Einsatz für das erfindungsgemäße Verfahren beträgt die Repetitionsrate der Laser zwischen 1 und 1000 Hz, geeignete Pulslängen sind 10 bis 100 ns.

Die erfindungsgemäß gekennzeichneten PET-Materialien sowie die nach dem erfindungsgemäßen Verfahren erhaltenen feinrauhen Oberflächen finden Anwendung im Zusammenhang mit der Konditionierung von PET-Folien. Sie zeichnen sich außerdem durch eine einheitliche Oberfläche mit gleichmäßigen Eigenschaften aus.

Solcherart ausgestattete PET-Folien eignen sich in hervorragender Weise vor allem als Substratmaterial im Rahmen der Herstellung magnetischer Aufzeichnungsträger, welche eine kohärente ferromagnetische Metalldünnschicht als Magnetschicht aufweisen. Diese Metallschichten werden mit Hilfe von PVD-Verfahren auf das Trägermaterial aufgebracht, wobei jedoch die Ausbildung der Oberfläche des Sübstratmaterials ein wesentlicher, qualitätsbestimmender Faktor für die Haftung der Schicht auf dem Träger und den Verschleiß der Schicht durch die tribologische Beanspruchung des Magnetkopfes ist.

Für die Verwendung der erfindungsgemäßen PET-Materialien sei beispielhaft auf die Herstellung dieser magnetischen Dünnschichtmedien eingegangen. Hierbei werden die als Folienbahnen eingesetzten PET-Substrate nach dem erfindungsgemäßen Verfahren der UV-Strahlung eines entsprechenden Excimer-Lasers ausgesetzt. Auf ein solchermaßen vorbehandeltes Substrat wird nun in bekannter Vorgehensweise die kohärente ferromagnetische Metalldünnschicht aufgebracht. Geeignete Metallschichten sind im allgemeinen Kobalt-haltig, wie z.B. Co-Ni-Cr, Co-Pt, Co-Ni-O, Co-Cr. Bevorzugt sind Kobalt-Chrom-Schichten mit 15 bis 35 At% Cr, Kobalt-Nickel-Schichten mit mehr als 10 At% Nickel oder Kobalt-Nickel-Sauerstoff-Schichten mit mehr als 10 At% Nickelanteil und zwischen 3 und 45 At% Sauerstoff. Jedoch sind auch entsprechende Metalldünnschichten auf Basis Eisen bekannt und angewandt. Die Herstellung dieser Schichten geschieht mit Hilfe eines PVD-Verfahrens, d.h. z.B. durch Verdampfen, Elektronenstrahlverdampfen, Sputtern, Ionenplattieren oder Beschichtung der Metallkomponenten mit Lichtbogenverfahren. Bevorzugt sind das Aufdampfen und Sputtern. Die auf diese Weise hergestellten ferromagnetischen Metallschichten sind zwischen 20 und 500 nm dick. Im Falle von Unterschichten werden Schichtdicken von 2 bis 300 nm bevorzugt. Die Dicke von Schutzschichten zur Verbesserung der Abriebs- und Korrosionsstabilität liegt zwischen 1 und 100 nm. Bekannt ist hier das Aufbringen einer Kohlenstoffschicht, das oberflächliche Oxidieren der Metallschicht, das Beschichten mit flüssigen Oligomeren meist auf Basis von Fluor-haltigen Polyethern, das Bilden von Oxiden, Nitriden oder Carbiden des Siliciums, Zirkons, Hafniums und Titans oder Kombinationen dieser Maßnahmen.

Die unter Verwendung der erfindungsgemäßen PET-Materialien bzw. des erfindungsgemäßen Verfahrens erhaltenen magnetischen Aufzeichnungsträger zeichnen sich durch eine erhöhte Haftung der Metallschicht auf dem Polymerfilm und durch eine Verminderung der Reibung sowie eine Verbesserung im Standbildverhalten aus. Dies sei an den nachfolgenden Beispielen gezeigt.

Generell gilt, daß das erfindungsgemäße Verfahren zur Erzeugung der spezifischen feinrauhen Oberfläche auf dem PET-Material sich dadurch auszeichnet, daß die Aufrauhung durch die UV-Bestrahlung in einem einzigen Prozeßschritt durchgeführt wird und daß dabei nur die Oberfläche der Folie verändert wird, während der Rest der Folie nicht beschädigt wird. Eine Behandlung des strukturierten PET-Materials, insbesondere nach einer Temperung, mit z.B. Alkoholen oder Aceton, ist ohne Einfluß auf die Oberflächenstruktur. Dagegen lassen sich die Dendrit-Strukturen mit Chloroform unter Ausbildung einer körnigen Oberfläche entfernen, wobei in der Oberfläche des PET-Materials Vertiefungen zu erkennen sind, deren Form dem Aussehen der Dendrite entspricht. Wegen des Einsatzes geringer Energien und beim Einsatz eines Excimer-Lasers mit geringen Pulszahlen ist es möglich, große Flächen bei erhöhtem Durchsatz gleichmäßig zu bestrahlen.

Im Falle des Einsatzes des erfindungsgemäßen Verfahrens bei der Herstellung von magnetischen Dünnschichtmedien ist es außerdem von Vorteil, daß die Herstellung der Oberflächenrauhigkeit der PET-Folien direkt vor einem weiteren Verarbeitungsschritt, z.B. dem Aufbringen einer ferromagnetischen Metalldünnschicht, in ein und derselben Prozeßkammer durchgeführt werden kann. Eine solche in-situ-Vorbehandlung gewährleistet, daß eine Alterung oder Verschmutzung der aufgerauhten Oberfläche nicht auftritt und, da die Strahlungsquelle außerhalb der Prozeßkammer aufgebracht ist, eine leichte Steuer- und Kontrollierbarkeit des Substratvorbehandlungsprozesses gewährleistet wird.

### Beispiel 1

### Verbesserung der Haftung

In einer handelsüblichen Aufdampfanlage wurden 200 nm dicke (Co₈₀Ni₂₀)-Schichten mit einem Elektronenstrahlverdampfer auf 50 µm dicke PET-Folien (Mylar-Folie der Firma Dupont) im Hochvakuum aufgedampft. Die PET-Folien wurden entweder vor dem Bedampfen keiner Vorbehandlung unterzogen oder in der Aufdampfanlage durch ein Quarzfenster mit einem Excimerlaser bei einer Wellenlänge von 248 nm mit Energiedichten von 30 bis 50 mJ/cm² und 1 bis 3 Pulsen bestrahlt.

An den jeweils erhaltenen Mustern wurden in einem Peeltest (inverser 180°-EAA-Peeltest; Y. De Puydt, P. Bertrand, P. Lutgen, Surf. Interface Anal., 12 (1988), 486; P. Phuku, P. Bertrand, Y. De Puydt, Thin Solid Films, 200 (1991), 263) die Schälkraft bestimmt. Dabei zeigt sich, daß eine nicht bestrahlte Probe eine Haftung von 0,9 N/cm aufwies, während die bestrahlten Proben eine Schälkraft von mindestens 3,5 N/cm aufwiesen.

### Beispiel 2

### Verminderung der Reibung

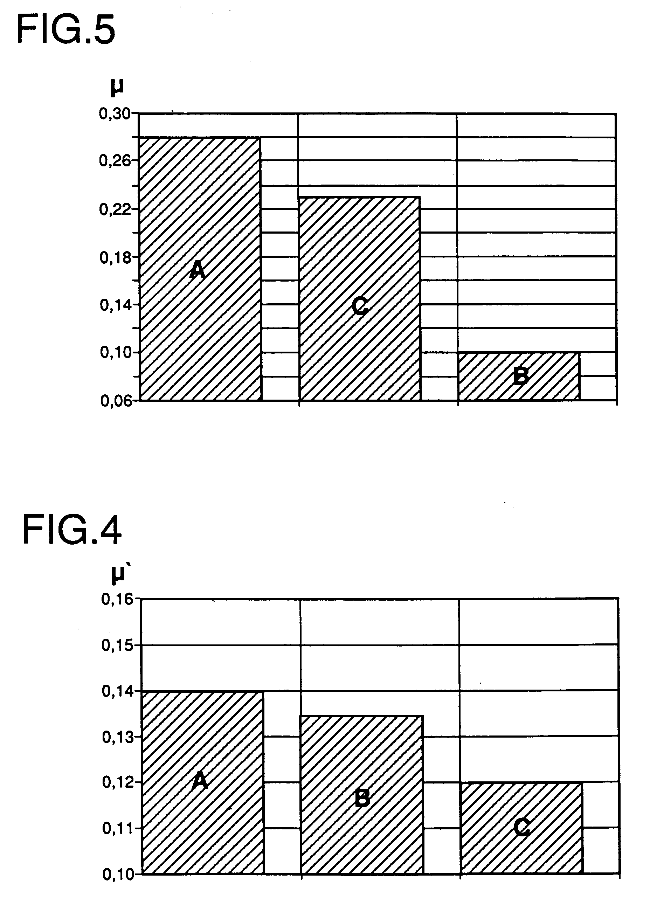

Superquasistatische Reibung (SQR):
Es wurden 200 nm dicke (Co₈₀Ni₂₀)₈₀O₂₀-Schichten auf Mylar-PET-Folien (50 µm) aufgedampft, die in einer Vakuumkammer zuvor in-situ durch UV-Bestrahlung im Vakuum mit dem KrF-Excimerlaser (248 nm) mit 1 bis 3 Pulsen bei Energiedichten von 29 und 40 mJ/cm² vorbehandelt waren. Bei der Messung des SQR-Koeffizienten (nach einer Einschleifphase, bei der der Prüfkörper über 50 mm mit 550 µm/sec über die Schicht gezogen wird, folgt die eigentliche Meßphase, bei der der Prüfkörper über die folgenden 5 mm nur noch mit der sehr geringen Vorschübgeschwindigkeit von 13 µm/sec über die Schicht bewegt wird) zeigt sich ein klarer Gang mit der Fluenz, d.h. der SQR-Koeffizient µ' veringert sich mit steigender Fluenz. Figur 4 zeigt die Meßergebnisse für die unbehandelte Folie A im Vergleich zu den mit 28,9 mJ/cm² und 39,3 mJ/cm² bestrahlten Folien B bzw. C.

### Gleitreibung:

Für dieselben o.g. Schichten wurde der konventionelle Gleitreibungskoeffizient µ gmessen (WC-Kugel, Durchmesser d = 6 mm, Vorschubgeschwindigkeit 1 cm/min). In allen Fällen ergibt sich auf den bestrahlten Flächen eine signifikante Erniedrigung der Gleitreibungskoeffizienten gegenüber den unbestrahlten Bereichen auf derselben Probe (Figur 5).

### Beispiel 3

### Verbesserung des Verschleißverhaltens

Zur Beurteilung der Auswirkung von UV-Vorbehandlungen auf die tribologischen Eigenschaften wurden an (Co-Ni-O)-Schichten auf vorbehandelten Mylar-Folien Standbildmessungen durchgeführt. Dabei wird zunächst ein Signal (10 kfci) auf das Medium aufgezeichnet und dann auf einem Trommeltester, bei dem der feststehende Magnetkopf mit dem sich unter ihm drehenden und kreisförmig eingespannten Medium in Kontakt steht, der Pegelabfall über der Zeit verfolgt. Es wird ein mit der Zeit monoton abfallendes Lesesignal registriert, bis die Magnetschicht vollständig bis auf die Folie durchgerieben ist und kein Lesesignal mehr nachweisbar ist. Mylar 200D-PET-Folien (Innenseite) wurden bei 248 nm mit dem Excimerlaser vorbehandelt und anschließend mit 200 nm Co-Ni-O bedampft. Die gewählten Laserfluenzen betrugen 30, 40 und 59 mJ/cm², die Bestrahlung erfolgte jeweils mit 1 und 3 Pulsen. Die Co-Ni-O-Schichten haben folgenden Aufbau: Zuerst eine 180 nm dicke Schicht mit einem Sauerstoff-Anteil von etwa 15 % und anschließend eine 20 nm dicke Schicht mit einem Sauerstoff-Anteil von etwa 40 %. Die Schichten wurden mit Fomblin Z-DOL lubriziert und dem Standbildtest unterzogen. Gegenüber unbestrahlten Referenzproben ergeben sich längere Standzeiten bei deutlich verringertem Pegelabfall. Auf bestrahlten Flächen sind bis zum vollständigen Durchreiben der Schicht erheblich mehr Umläufe möglich als auf den unbestrahlten Flächen derselben Probe. Während auf unbestrahlten Flächen Standzeiten bis zum vollständigen Verschwinden des Pegels von oft nur wenigen Minuten oder weniger beobachtet werden, können auf bestrahlten Flächen Standzeiten von mehreren Stunden erzielt werden. Das Lesesignal ist dabei auf den bestrahlten Flächen durchwegs größer als auf den nicht vorbehandelten Flächen. Lichtmikroskopische Aufnahmen zeigen auf unbestrahlten Flächen entlang der Kopfspur Abplatzungen der Magnetschicht. Insbesondere am Rande der Spur, wo besonders hohe Scherkräfte wirken und die Schicht hohen Beanspruchungen ausgesetzt ist, kommt es auf nichtbestrahlten Proben häufig zu großflächigen Ablösungen der Schicht. Diese Zerstörungen machen das Medium völlig unbrauchbar und der Pegel sinkt abrupt auf Null ab. Auf bestrahlten Flächen ist der Abrieb deutlich geringer und es finden sich im Lichtmikroskop keine Anzeichen mechanischer Schädigungen oder Zerstörungen der Schicht entlang der Kopfspur.

Aufgrund der verbesserten Haftung der Schicht hält das Medium weit größeren Scherkräften am Interface stand und die verminderte Reibung verringert das Spannungsfeld und führt zu einer verminderten Krafteinleitung bei der tribologischen Beanspruchung durch den Kopf.

Damit ist gezeigt, daß die durch UV-Bestrahlung auf der Oberfläche von PET erzeugten feinen Rauhigkeiten in Form dendritischer Strukturen zu verbessertem Standbildverhalten führen, während die unbehandelten glatten Folien aufgrund der großen Kontaktfläche mit dem Kopf zum Kleben neigen, wodurch die Schicht schnell zerstört wird und sie daher völlig unzureichende Verschleißeigenschaften aufweisen.

## Patentansprüche

1. Flächiges Polyethylenterephthalat-Material mit einer geringen Oberflächenrauhigkeit, dadurch gekennzeichnet, daß die Oberflächenrauhigkeit aus dendritischen, plateauartigen Strukturen mit zerklüftetem, fraktalem Rand besteht, wobei die Strukturen eine Höhe von 2 bis 50 nm und ein Verhältnis von Umfang zu Höhe von größer 500 aufweisen.

2. Flächiges Polyethylenterephthalat-Material gemäß Anspruch 1, dadurch gekennzeichnet, daß der mittlere Abstand zwischen den dendritischen, plateauartigen Strukturen nicht mehr als 10 µm beträgt.

3. Verfahren zur Herstellung von geringen Oberflächenrauhigkeiten auf flächigem Polyethylenterephthalat-Material, dadurch gekennzeichnet, daß die Oberflächenrauhigkeit aus dendritischen, plateauartigen Strukturen mit zerklüftetem, fraktalem Rand mit einer Höhe von 2 bis 50 nm und einem Verhältnis von Umfang zu Höhe von größer 500 durch Bestrahlen des Polyethylenterephthalat-Materials im Vakuum mit einem durch Zerfall von Excimeren erzeugten UV-Licht in einem Wellenlängenbereich von 150 bis 400 nm bei einer Temperatur von weniger als 100°C hergestellt wird.

4. Verfahren zur Herstellung von geringen Oberflächenrauhigkeiten auf flächigem Polyethylenterephthalat-Material, dadurch gekennzeichnet, daß die Oberflächenrauhigkeit aus dendritischen, plateauartigen Strukturen mit zerklüftetem, fraktalem Rand mit einer Höhe von 2 bis 50 nm und einem Verhältnis von Umfang zu Höhe von größer 500 durch Bestrahlen des Polyethylenterephthalat-Materials in einer einen Sauerstoff- oder Stickstoffpartialdruck von kleiner 200 mbar aufweisenden Atmosphäre mit einem durch Zerfall von Excimeren erzeugten UV-Licht in einem Wellenlängenbereich von 150 bis 400 nm bei einer Temperatur von weniger als 100°C hergestellt wird.

5. Verfahren zur Herstellung von geringen Oberflächenrauhigkeiten auf flächigem Polyethylenterephthalat-Material, dadurch gekennzeichnet, daß die Oberflächenrauhigkeit aus dendritischen, plateauartigen Strukturen mit zerklüftetem, fraktalem Rand mit einer Höhe von 2 bis 50 nm und einem Verhältnis von Umfang zu Höhe von größer 500 durch Bestrahlen des Polyethylenterphthalat-Materials in einer einen Argonpartialdruck von kleiner 1 bar aufweisenden Atmosphäre mit einem durch Zerfall von Excimeren erzeugten UV-Licht in einem Wellenlängenbereich von 150 bis 400 nm bei einer Temperatur von weniger als 100°C hergestellt wird.

6. Verfahren gemäß einem der Ansprüche 3, 4 oder 5, dadurch gekennzeichnet, daß die UV-Bestrahlung mit einem gepulsten UV-Excimer-Laser einer Energiedichte zwischen 1 und 1000 mJ/cm² und mit einer Pulszahl zwischen 1 bis 25 Pulsen pro Fläche erfolgt.

7. Verwendung des flächigen Polyethylenterephthalat-Materials gemäß Anspruch 1 als polymeres Trägermaterial für eine mittels eines PVD-Verfahrens aufgebrachte kohärente, ferromagnetische Metalldünnschicht.
